(19) Europäisches Patentamt
European Patent Office
Office européen des brevets

(11) **EP 3 544 793 B1**

(12) **EUROPÄISCHE PATENTSCHRIFT**

(45) Veröffentlichungstag und Bekanntmachung des Hinweises auf die Patenterteilung:
**09.06.2021  Patentblatt 2021/23**

(21) Anmeldenummer: **17803914.5**

(22) Anmeldetag: **22.11.2017**

(51) Int Cl.:
***B29C 64/153*** (2017.01)

(86) Internationale Anmeldenummer:
**PCT/EP2017/080008**

(87) Internationale Veröffentlichungsnummer:
**WO 2018/095952 (31.05.2018 Gazette 2018/22)**

(54) **VERFAHREN UND SYSTEM ZUR HERSTELLUNG EINES GEGENSTANDES DURCH SCHICHTWEISEN AUFBAU IM STEMPELVERFAHREN**

METHOD AND SYSTEM FOR THE PRODUCTION OF AN OBJECT THROUGH LAYERED CONSTRUCTION IN A STAMPING PROCESS

PROCÉDÉ ET SYSTÈME DE FABRICATION D'UN OBJET PAR STRUCTURE STRATIFIÉE SELON UN PROCÉDÉ DE POINÇONNAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2016  EP 16199955**

(43) Veröffentlichungstag der Anmeldung:
**02.10.2019  Patentblatt 2019/40**

(73) Patentinhaber: **Covestro Deutschland AG**
**51373 Leverkusen (DE)**

(72) Erfinder:
• ACHTEN, Dirk
  **51375 Leverkusen (DE)**
• BÜSGEN, Thomas
  **51377 Leverkusen (DE)**
• TOMCZYK, Christoph
  **51379 Leverkusen (DE)**
• WAGNER, Roland
  **51375 Leverkusen (DE)**
• METTMANN, Bettina
  **41542 Dormagen (DE)**
• DIJKSTRA, Dirk
  **51519 Odenthal (DE)**
• AKBAS, Levent
  **58455 Witten (DE)**
• GUEDOU, Arnaud
  **77700 Bailly Romainvilliers (FR)**

(74) Vertreter: **Levpat**
**c/o Covestro AG**
**Gebäude 4825**
**51365 Leverkusen (DE)**

(56) Entgegenhaltungen:
WO-A1-2016/053305    WO-A1-2016/084350
US-A- 5 192 559      US-A1- 2005 208 168
US-A1- 2015 246 487

EP 3 544 793 B1

**Beschreibung**

Die vorliegende Erfindung betrifft ein Verfahren zur Herstellung eines Gegenstands, in dem eine Schicht mit schmelzbarem Polymer selektiv zumindest teilweise aufgeschmolzen wird. Dieses erfolgt gemäß einem ausgewählten Querschnitt des zu bildenden Gegenstands. Das zumindest teilweise aufgeschmolzene Material wird Lage für Lage an einen Träger beziehungsweise an mit dem Träger verbundenen vorigen Lagen angefügt. Ein System, welches zur Durchführung des erfindungsgemäßen Verfahrens geeignet ist, weist ein Substrat, eine Steuerungseinheit, eine Applikationseinheit für die Partikel auf das Substrat, eine Energie-Einwirkungseinheit und eine Kontaktierungseinheit auf.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen, Bohren oder Zerspanen. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Beim sogenannten Fused Deposition Modeling (FDM) beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Ist die Geometrie dieses Gegenstands komplex, zum Beispiel mit geometrischen Hinterschneidungen, müssen zusätzlich Stützmaterialien mitgedruckt und nach Fertigstellung des Gegenstands wieder entfernt werden.

Daneben existieren additive Fertigungsverfahren, welche thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim zuvor beschrieben FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren (EP 1648686) erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen.

Ohne im näheren Sinne zu den additiven Fertigungsverfahren zu zählen werden Transfer- oder Tampondruckverfahren in der Halbleiterindustrie zum Aufbau von elektronischen Elementen benutzt. So offenbart EP 1 713 311 A1 ein Verfahren und eine Vorrichtung zur Herstellung eines elektronischen integrierten Schaltkreises mittels funktionaler Tinte und einem rotierenden Rolle-zu-Rolle-Pressvorgang. Das Verfahren beinhaltet einen ersten Schritt der Injektion von funktionaler Tinte in eine Vertiefung einer Formrolle, einen zweiten Schritt des Entfernens von Tinte auf der Oberfläche der Formrolle, einen dritten Schritt des Trocknens der in die Formrolle injizierten funktionalen Tinte, einen vierten Schritt des Transfers der getrockneten Oberfläche der funktionalen Tinte auf eine Druckrolle, einen fünften Schritt des Trocknens einer weiteren Oberfläche der auf die Druckrolle transferierten funktionalen Tinte, einen sechsten Schritt des Transferierens der funktionalen Tinte von der Druckrolle auf flexibles Druckpapier, welches von einer Rolle abgewickelt wird und einen siebten Schritt des Wickelns des Druckpapiers, auf das ein elektronischer Schaltkreis gedruckt ist, auf eine Wickelrolle.

WO 2003/059026 A1 offenbart ein Verfahren zur Herstellung einer elektrischen Schaltung mit den Schritten: Zuführen eines Substrats zu einer Transferdruckeinrichtung; Zuführen eines mit einem Material versehenen Trägers zwischen die Transferdruckeinrichtung und das Substrat, wobei das Material ein elektrisch funktionales Polymermaterial aufweist; strukturiertes Übertragen zumindest eines Teils des Materials von dem Träger auf das Substrat mittels der Transferdruckeinrichtung; und Fixieren des strukturiert übertragenden Materials an dem Substrat, um eine definierte Struktur aus fixiertem Material zu erhalten.

Bislang existieren zum Aufbau dreidimensionaler Strukturen im Sinne der additiven Fertigung mittels Transferdruckverfahren unterschiedliche, zumeist komplizierte Ansätze.

Das Gebrauchsmuster CN 204109374 U beschreibt ein Wärmetransferdruck-Band für das dreidimensionale Drucken und einen 3D-Drucker mit diesem Band. Der 3D-Drucker umfasst eine Druckplattform und einen Druckkopf, worin der Abstand zwischen der Druckplattform und dem Druckkopf angepasst werden kann.

WO 2012/164015 A1 betrifft ein additives Aufbauverfahren zur Herstellung einer Mehrzahl von Schichten unter Ausbildung eines Stapels. Im Verfahren wird eine variable Potentialdifferenz zwischen einem leitenden Element bei einem ersten Potential und einer Ionenquelle bei einem zweiten Potential erzeugt und es wird ein elektrisches Feld zwischen dem leitenden Element und der Ionenquelle aufgebaut. Das elektrische Feld dringt durch den Stapel hindurch zur nächstgelegenen Oberfläche des Stapels, welche nächstgelegen zu einem Transfermedium ist. Das Verfahren umfasst weiterhin das Akkumulieren einer elektrischen Ladung von der Ionenquelle auf die nächstgelegene Oberfläche des Stapels und das Transferieren von Depositionsmaterial von einem Transfermedium auf die nächstgelegene Oberfläche. Die Feldstärke an der nächstgelegenen Oberfläche des Stapels wird kontrolliert, um einen homogenen Transfer des Depositionsmaterials auf die nächstgelegene Oberfläche zu bewirken.

US 2009/304952 A1 offenbart eine Vorrichtung zur Herstellung dreidimensionaler Objekte, umfassend ein Tablett, welches zum Halten eines Objekts während der Herstellung eingerichtet ist; eine Ablageoberfläche, auf welche Aufbaumaterialien deponiert werden und einen Tintenstrahldruckkopf, welcher eingerichtet ist, um selektiv Aufbaumaterialien in einer Schicht entsprechend einem Schichtbild auf die Ablageoberfläche zu deponieren. Die deponierten Materialien werden mit dem herzustellen Objekt vereinigt, wenn das Tablett den Gegenstand derart bewegt, dass er mit den deponierten Materialien in Kontakt kommt.

WO 2015/107066A1 A1 beschreibt ein additives Herstellungssystem zur Herstellung eines dreidimensionalen Objekts. Ein Harzaufträger ist vorgesehen, um eine Schicht eines härtbaren Harzes auf eine erste Seite eines Foliensubstrats aufzutragen. Das Foliensubstrat wird durch eine transparente Stützplatte gestützt und eine Strahlungsquelle zur Strahlungshärtung der Harzschicht ist vorgesehen. Eine Plattform ist vorgesehen, um eine gestapelte Anordnung einer oder mehrerer gehärteter Harzschichten, wenigstens teilweise dem dreidimensionalen Objekt entsprechend, zu halten und ein Positionierungssystem wird zur relativen Positionierung des Foliensubstrats und der Plattform eingesetzt. Eine im Wesentlichen parallel zur Harzschicht angeordnete Maske ist vorhanden und blockiert wenigstens teilweise einfallende Strahlung auf die Harzschicht, entsprechend einem Querschnitt des Gegenstands.

Darüber hinaus sind US 2005/0208168A1 und US 2015/0246487A1 bekannt, die beide den Oberbegriff der Hauptansprüche offenbaren.

Die beschriebenen Transferdruckverfahren im Bereich der additiven Fertigung haben den Nachteil, dass sie entweder apparativ kompliziert sind oder, bedingt durch die elektrostatische Natur einiger Verfahrensschritte, nicht jedes thermoplastische Material verarbeiten können.

Eine Aufgabe der vorliegenden Erfindung ist es, mindestens einen Nachteil des Standes der Technik wenigstens zu einem Teil zu überwinden. Weiterhin stellt sich die vorliegende Erfindung die Aufgabe, ein vereinfachtes additives Fertigungsverfahren bereitzustellen, in dem eine große Bandbreite an Materialien im Vergleich zu aktuell verfügbaren Pulververfahren einsetzbar ist.

Des Weiteren war eine Aufgabe der Erfindung, ein Verfahren und ein System bereitzustellen, mit dem Gegenstände möglichst ressourcenschonend und individualisiert hergestellt werden können. Erfindungsgemäß gelöst wird die Aufgabe durch ein Verfahren gemäß Anspruch 1. Ein System zur Durchführung des Verfahrens ist in Anspruch 12 angegeben. Vorteilhafte Weiterbildungen sind in den Unteransprüchen angegeben. Sie können beliebig miteinander kombiniert werden, sofern sich aus dem Kontext nicht eindeutig das Gegenteil ergibt.

Die Schritte I) bis IV) im erfindungsgemäßen Verfahren betreffen den Aufbau der ersten Lage des Gegenstandes. Im Gegensatz hierzu betreffen Schritte V) bis VIII) den Aufbau aller weiteren Lagen. Der Unterschied liegt darin, dass in Schritt III) eine Kontaktierung des Trägers mit den gebildeten Volumina erfolgt und in Schritt VII) die gebildeten Volumina mit bereits am Träger haftenden Volumina kontaktiert werden.

In Schritt I) beziehungsweise V) des Verfahrens wird eine Schicht auf einem Substrat bereitgestellt. Die Schicht enthält ein schmelzbares Polymer und bildet somit das Aufbaumaterial für den herzustellenden Gegenstand. Neben dem schmelzbaren Polymer kann die Schicht noch weitere Additive wie Füllstoffe, Stabilisatoren und dergleichen, aber auch weitere Polymere, enthalten. Der Gesamtgehalt an Additiven in der Schicht kann beispielsweise $\geq 0,1$ Gewichts-% bis $\leq 50$ Gewichts-%, bevorzugt $\geq 0,3$ Gewichts-% bis $\leq 25$ Gewichts-% besonders bevorzugt 0,5 bis 15 Gewichts%, betragen.

In Schritten II) und VI) wird die Region der Schicht beziehungsweise das in ihr vorliegende schmelzbare Polymer entsprechend dem ausgewählten Querschnitt des Gegenstandes zumindest teilweise aufgeschmolzen. Vorzugsweise wird sämtliches hierzu vorgesehene schmelzbare Material aufgeschmolzen. Das Aufschmelzen kann beispielsweise mittels ablenkbarer Laser erfolgen und korrespondiert zu einem ausgewählten Querschnitt des herzustellenden Gegenstands. Weitere erfindungsgemäße Möglichkeiten für das Aufschmelzen werden später erläutert werden. Das Auswählen des jeweiligen Querschnitts erfolgt zweckmäßigerweise durch ein CAD-Programm, mit dem ein Modell des herzustellenden Gegenstandes erzeugt wurde. Diese Operation wird auch "Slicing" genannt, und dient als Grundlage für die Steuerung des Bestrahlens. Die nach dem Bestrahlen der Partikelschicht erhaltenen zusammenhängenden Bereiche werden im Rahmen der vorliegenden Erfindung "Volumina" genannt.

In Schritten III) und VII) werden die Volumina kontaktiert, um die Voraussetzungen für ihr Ablösen vom Substrat zu schaffen. Je nach Verfestigungs- und Rekristallisationsverhalten des schmelzbaren Polymers und damit auch seiner Neigung, sich mit anderen Materialien stoffschlüssig zu verbinden, kann die Zeitspanne zwischen dem Ende von Schritt II) und dem Beginn von Schritt III) beziehungsweise dem Ende von Schritt VI) und dem Beginn von Schritt VII) beispielsweise $\geq 0.1$ Sekunde bis $\leq 60$ Sekunden, bevorzugt $\geq 0.5$ Sekunden

bis ≤ 10 Sekunden betragen.

Dass in Schritt III) das mindestens eine Volumen mit dem Träger verbunden wird bedeutet, dass zwischen dem Volumen und dem Träger eine stoffschlüssige Verbindung aufgebaut wird, welche es ermöglicht, in einem nachfolgenden Schritt die Volumina zu bewegen. Die Verbindung zwischen Volumina und Träger ist vorzugsweise so fest, dass der herzustellende Gegenstand während des erfindungsgemäßen Verfahrens sich nicht vom Träger ablöst, andererseits erlaubt die Stärke der Verbindung es vorzugsweise, dass nach Ende des Herstellungsverfahrens der Gegenstand zerstörungsfrei entfernt werden kann. Analog bedeutet in Schritt VII), wenn das mindestens eine Volumen mit mindestens einem der zuvor mit dem Träger verbundenen Volumina verbunden wird, dass eine stoffschlüssige Verbindung aufgebaut wird, welche eine höhere Festigkeit als eine Haftung des zuvor hergestellten Volumens zu dem Substrat aufweist.

Das Ablösen selbst erfolgt gemäß Schritten IV) und VIII) durch ein Entfernen des Trägers vom Substrat. Im einfachsten Fall bewegt sich der Träger vertikal auf und ab, um Schritte III)/VII) und IV)/VIII) durchzuführen. Um das Ablösen in Schritt IV) zu vereinfachen, kann die Oberfläche des Trägers, welche das zuvor durch Bestrahlen erhaltene Volumen oder Volumina kontaktiert, von der Oberfläche des Substrats verschieden sein, wobei die Haftung des Volumens oder der Volumina am Substrat geringer als am Träger ist. Gleiches gilt für das Ablösen in Schritt VIII), wobei die Haftung des zuvor erhaltenen Volumens oder Volumina an bereits an dem Träger haftenden Volumina größer als am Substrat ist. Geeignete Materialien für das Substrat sind beispielsweise Materialien mit niedriger Oberflächenenergie wie PTFE sowie fluorierte oder silikonierte Oberflächen von Papieren, Metallen oder Polymeren. Ein geeignetes Material für den Träger ist zum Beispiel Stahl, Papier oder ein doppelseitiges Klebeband mit einer geeigneten Klebeschicht in Richtung zum Substrat. In einer besonderen Ausführungsform kann diese Klebeschicht nachträglich durch verschiedene bekannte Prozeduren wie Waschen, Abtragen, Lösen vom Produkt entfernt werden, in einer weiteren bevorzugten Ausführungsform verbleibt sie an den Kontaktstellen am Produkt.

Vorzugsweise beträgt in Schritt I) und/oder in Schritt V) die Dicke der Schicht ≥1 μm bis ≤ 1000 μm. Vorzugsweise beträgt die Dicke der Schicht ≥10 μm bis ≤ 500 μm, mehr bevorzugt ≥20 μm bis ≤ 300 μm. Die Auflösung in der Aufbauebene (xy-Ebene) beträgt vorzugsweise ≤ 500 μm, besonders bevorzugt < 200 μm.

Das erfindungsgemäße Verfahren kann in der normalen Umgebungsatmosphäre oder aber auch in einer kontrollierten, klimatisierten Atmosphäre durchgeführt werden.

In einer bevorzugten Ausführungsform werden die Schritte II) und/oder VI) derart durchgeführt, dass das Einwirken von Energie auf den ausgewählten Teil der Schicht durch Bestrahlen mit einem Energiestrahl oder mehreren Energiestrahlen erfolgt. Diese Verfahrensform kann als Variante eines selektiven Sinterverfahrens, insbesondere als selektives Lasersinterverfahren (SLS) angesehen werden. Der Energiestrahl (oder Energiestrahlen) kann ein Strahl elektromagnetischer Energie wie zum Beispiel ein "Lichtstrahl" von UV- bis IR-Licht sein. Vorzugsweise ist der Energiestrahl ein Laserstrahl, besonders bevorzugt mit einer Wellenlänge zwischen 600 nm und 15 μm. Der Laser kann als Halbleiterlaser oder als Gaslaser ausgeführt sein. Denkbar ist auch ein Elektronenstrahl.

In einer weiteren bevorzugten Ausführungsform werden die Schritte II) und/oder VI) derart durchgeführt, dass zunächst eine Flüssigkeit auf den ausgewählten Teil der Schicht aufgetragen wird, wobei die Flüssigkeit die Absorption von Energie in den von ihr kontaktierten Bereichen der Schicht relativ zu den nicht von ihr kontaktierten Bereichen erhöht und anschließend die Schicht einer Energiequelle ausgesetzt wird. Bei dieser Ausführungsform kann beispielsweise eine Flüssigkeit enthaltend einen IR-Absorber mittels Inkjet-Verfahren auf die Schicht aufgetragen werden. Das Bestrahlen der Schicht führt zu einer selektiven Erwärmung derjenigen Bereiche der Schicht (insbesondere, wenn Partikel eingesetzt werden), welche in Kontakt mit der Flüssigkeit samt IR-Absorber stehen. Auf diese Weise kann ein Verbinden der Partikel erreicht werden. Die Energiequelle ist insbesondere ein UV- bis IR-Strahler. Optional kann zusätzlich eine zweite Flüssigkeit eingesetzt werden, die hinsichtlich des Verhaltens gegenüber der verwendeten Energie komplementär zur Energie absorbierenden Flüssigkeit ist. In Bereichen, in denen die zweite Flüssigkeit aufgetragen wird, wird die eingesetzte Energie nicht absorbiert, sondern reflektiert. Die unter der zweiten Flüssigkeit liegenden Bereiche werden somit abgeschattet. Auf diese Weise kann die Trennschärfe gegenüber aufzuschmelzenden und nicht aufzuschmelzenden Bereichen der Schicht erhöht werden.

In einer bevorzugten Ausführungsform wird die auf dem Substrat befindliche Schicht eines schmelzbaren Polymers, bevor ein Teil der Schicht selektiv geschmolzen wird, vorgewärmt auf eine Temperatur von ≥ 100 °C unterhalb ihres Schmelzpunktes, bevorzugt ≥ 50 °C unterhalb ihres Schmelzpunktes. Bei hauptsächlich amorphen Polymeren wie Polystyrol oder Polycarbonat ist die Bezugsgröße die Glasübergangstemperatur; bei zumindest teilkristallinen Polymeren wie zum Beispiel Polyamid 12 ist die Bezugsgröße der Schmelzpunkt selbst. Das Vorwärmen kann über übliche Methoden wie z. B. Heißluft, Wärmestrahlung oder Wärmekonvektion durch z. B. ein temperiertes Substrat erfolgen.

In einer weiteren bevorzugten Ausführungsform werden die Schritte I) und/oder V) derart durchgeführt, dass eine Schicht mit Partikeln auf das Substrat aufgetragen wird, wobei die Partikel ein schmelzbares Polymer enthalten.

Wenn im erfindungsgemäßen Verfahren Partikel eingesetzt werden, ist es bevorzugt, dass ≥ 90 Gewichts-% der in Schritten I) und/oder V) eingesetzten schmelzbaren Partikel einen Teilchendurchmesser von $\geq 0.001$ mm und $\leq 0.25$ mm (bevorzugt $\geq 0.01$ mm und $\leq 0.2$ mm, besonders bevorzugt $\geq 0.02$ mm und $\leq 0.15$ mm) aufweisen.

In einer weiteren bevorzugten Ausführungsform werden die Schritte I) und/oder V) derart durchgeführt, dass ein Film enthaltend ein schmelzbares Polymer bereitgestellt wird, wobei der Film auf einer Trägerfolie als Substrat angeordnet ist. Somit wird im Gegensatz zu pulverbasierten Varianten ein Film selektiv, entsprechend dem jeweils ausgewählten Querschnitt des herzustellenden Gegenstands, zumindest teilweise aufgeschmolzen.

Im erfindungsgemäßen Verfahren wird das Kontaktieren in Schritt III) und/oder Schritt VII) derart durchgeführt, dass eine Relativbewegung des Trägers zum Substrat durchgeführt wird, der Anpressdruck zwischen Träger und Substrat und/oder zwischen Träger und Oberfläche der Pulverschicht überwacht wird und die Relativbewegung bei Überschreiten eines vorbestimmten Anpressdrucks unterbrochen wird. Die Überwachung des Anpressdrucks kann beispielsweise mittels Druckmessung am Träger erfolgen. Eine weitere Überschreitung des Anpressdrucks zwischen Träger und Substrat oder Oberfläche der Pulverschicht hätte eine Kompression der zuvor durch Aufschmelzen erhaltenen Volumina zur Folge, was feine Strukturen zerstören könnte. Der erreichte durchschnittliche Druck über die gesamte kontaktierte Fläche kann typischerweise zwischen 0.01 bar und 5 bar liegen.

In einer weiteren bevorzugten Ausführungsform des Verfahrens ist das schmelzbare Polymer derart ausgewählt, dass ein Tropfen des schmelzbaren Polymers im geschmolzenen Zustand einen Kontaktwinkel zu dem im Verfahren eingesetzten Substrat von $\geq 60°$ bis $\leq 180°$ (bevorzugt $\geq 70°$ bis $\leq 150°$, mehr bevorzugt $\geq 90°$ bis $\leq 150°$) aufweist und/oder das schmelzbare Polymer ist derart ausgewählt, dass ein Tropfen des schmelzbaren Polymers im geschmolzenen Zustand einen Kontaktwinkel zu dem im Verfahren eingesetzten Träger von $\geq 0°$ bis $\leq 90°$ (bevorzugt $\geq 10°$ bis $\leq 80°$, mehr bevorzugt $\geq 20°$ bis $\leq 60°$) aufweist. Somit benetzt das geschmolzene Polymer die Oberfläche des Substrats schlecht, während die Oberfläche des Trägers gut benetzt wird. Der Kontaktwinkel kann mittels optischer Methoden, wie sie in Verfahren zur Bestimmung der Oberflächenenergien bekannt sind, ermittelt werden. Die Kontaktwinkelmessung oder eine Messung mit vergleichbarer Aussagekraft erfolgt dabei typischerweise bei einer Temperatur von 20° C oder mehr oberhalb der Schmelztemperatur der untersuchten Polymere.

In einer weiteren bevorzugten Ausführungsform des Verfahrens werden die Schritte II) und/oder VI) derart durchgeführt, dass das mindestens eine erhaltene Volumen nicht das Substrat kontaktiert. Dieses kann beispielsweise dadurch erreicht werden, dass die Leistung eines zum Einstrahlen verwendeten Lasers verringert wird und/oder die Zeit, in der der Laser auf einen bestimmten Bereich einwirkt, verringert wird. Eine andere Möglichkeit ist eine nicht schmelzende Partikelschicht über dem Substrat. Wenn zwischen Volumen oder Volumina und dem Substrat noch Partikel vorliegen, wird die Haftung zwischen dem Volumen oder den Volumina und dem Substrat praktisch nichtexistent. Dieses vereinfacht das Ablösen vom Substrat erheblich.

In einer weiteren bevorzugten Ausführungsform des Verfahrens werden die Schritte II) und/oder VI) derart durchgeführt, dass nach dem zumindest teilweisen Aufschmelzen der Partikel deren aufgeschmolzenes Material bei einer Temperatur von $\geq 20°C$ oberhalb des Schmelzpunktes ihres Materials einen Speichermodul G' (bestimmt durch Viskosimetriemessung mit einem Platte/Platte-Oszillationsscherviskosimeter bei einer Kreisfrequenz von 1/s) von $\geq 5 \cdot 10^3$ Pa bis $\leq 1 \cdot 10^7$ Pa (bevorzugt $\geq 1 \cdot 10^4$ Pa bis $\leq 5 \cdot 10^6$ Pa, besonders bevorzugt $\geq 5 \cdot 10^4$ Pa bis $\leq 1 \cdot 10^6$ Pa) aufweist. Dieses kann durch eine entsprechend gewählte Ansteuerung des Lasers hinsichtlich Leistung und Leistungsdichte erreicht werden. Bei den gewählten Speichermoduln kann erwartet werden, dass das Material klebrig ist und sich daher gut mit Träger oder zuvor gebildeten Volumina verbindet.

In einer weiteren bevorzugten Ausführungsform des Verfahrens werden die Schritte III) und/oder VII) derart durchgeführt, dass zuvor mit dem Träger verbundene Volumina einen Speichermodul G' (bestimmt durch Viskosimetriemessung mit einem Platte/Platte-Oszillationsscherviskosimeter bei einer Kreisfrequenz von 1/s) von $> 1 \cdot 10^7$ Pa (bevorzugt $1 \cdot 10^8$ Pa) aufweisen. Bei einem solchen Speichermodul kann erwartet werden, dass das Material nicht mehr klebrig ist und unter den im Verfahren herrschenden Bedingungen weder am Substrat noch am nicht aufgeschmolzenen Produkt zur Haftung gebracht wird.

In einer weiteren bevorzugten Ausführungsform des Verfahrens ist das schmelzbare Polymer ausgewählt aus der Gruppe bestehend aus Polyurethan, Polyester, Polyalkylenoxid, weichgemachtes PVC, Polyamid, Protein, PEEK, PEAK, Polypropylen, Polyethylen, Thermoplastisches Elastomer, POM, Polyacrylat, Polycarbonat, Polymethylmethacrylat, Polystyrol oder einer Kombination aus mindestens zwei hiervon.

In einer weiteren bevorzugten Ausführungsform des Verfahrens ist das schmelzbare Polymer ein thermoplastisches Elastomer und weist einen Schmelzbereich (DSC, Differential Scanning Calorimetry; zweite Aufheizung mit Aufheizrate 5 K/min) von $\geq 20$ °C bis $\leq 240$ °C (bevorzugt $\geq 40$ °C bis $\leq 220$ °C, mehr bevorzugt $\geq 70$ °C bis $\leq 200$ °C) auf, eine Shore A Härte gemäß DIN ISO 7619-1 von $\geq 40$ bis und $\leq 85$ Shore D (bevorzugt $\geq 50$ Shore A bis $\leq 80$ Shore D, mehr bevorzugt $\geq 60$ Shore A bis $\leq 75$ Shore D) auf und eine Schmelzvolumenrate (melt volume rate, MVR) gemäß ISO 1133 (190 °C, 10 kg) von $\geq 25$ bis $\leq 200$ (bevorzugt $\geq 30$ bis $\leq 150$, mehr bevorzugt $\geq 35$ bis $\leq 100$) cm$^3$/10 min auf.

Bei dieser DSC-Messung wird das Material folgendem Temperaturzyklus unterworfen: 1 Minute bei minus 60 °C, danach Aufheizen auf 240 °C mit 20 Kelvin/Minute, dann Abkühlen auf minus 60 °C mit 5 Kelvin/Minute, dann 1 Minute bei minus 60 °C, dann Aufheizen auf 240 °C mit 20 Kelvin/Minute.

In einer weiteren bevorzugten Ausführungsform des Verfahrens ist das schmelzbare Polymer ein thermoplastisches Elastomer und weist einen Schmelzbereich (DSC, Differential Scanning Calorimetry; zweite Aufheizung mit Aufheizrate 5 K/min) von $\geq$ 20 °C bis $\leq$ 240 °C (bevorzugt $\geq$ 40 °C bis $\leq$ 220 °C, mehr bevorzugt $\geq$ 70 °C bis $\leq$ 200 °C) auf, eine Shore A Härte gemäß DIN ISO 7619-1 $\geq$ 40 bis und $\leq$ 85 Shore D (bevorzugt $\geq$ 50 Shore A bis $\leq$ 80 Shore D, mehr bevorzugt $\geq$ 60 Shore A bis $\leq$ 75 Shore D) auf, bei einer Temperatur T eine Schmelzvolumenrate (melt volume rate, MVR) gemäß ISO 1133 (10 kg) von 5 bis 15 (bevorzugt $\geq$ 6 bis $\leq$ 12, mehr bevorzugt $\geq$ 7 bis $\leq$ 10) cm$^3$/10 min auf und eine Änderung der Schmelzvolumenrate (10 kg) bei einer Erhöhung dieser Temperatur T um 20 °C von $\leq$ 90 (bevorzugt $\leq$ 70, mehr bevorzugt $\leq$ 50) cm$^3$/10 min auf.

Auch bei dieser DSC-Messung wird das Material folgendem Temperaturzyklus unterworfen: 1 Minute bei minus 60 °C, danach Aufheizen auf 240 °C mit 20 Kelvin/Minute, dann Abkühlen auf minus 60 °C mit 5 Kelvin/Minute, dann 1 Minute bei minus 60 °C, dann Aufheizen auf 240 °C mit 20 Kelvin/Minute.

Dieses thermoplastische Elastomer, bevorzugt ein thermoplastisches Polyurethanelastomer, weist ein flaches Aufschmelzverhalten auf. Das Aufschmelzverhalten wird über die Änderung des MVR (melt volume rate) gemäß ISO 1133 bei 5 Minuten Vorheizzeit und 10 kg in Abhängigkeit von der Temperatur bestimmt. Als "flach" gilt ein Aufschmelzverhalten dann, wenn der MVR bei einer Ausgangstemperatur $T_x$ einen Ausgangswert von 5 bis 15 cm$^3$/10 min aufweist und durch Temperaturerhöhung um 20 °C auf $T_{x+20}$ um nicht mehr als 90 cm$^3$/10 min steigt.

In einer weiteren bevorzugten Ausführungsform der Verwendung ist das Elastomer ein thermoplastisches Polyurethanelastomer, das erhältlich ist aus der Reaktion der Komponenten:

a) mindestens ein organisches Diisocyanat

b) mindestens eine mit gegenüber Isocyanatgruppen reaktiven Gruppen aufweisenden Verbindung mit einem zahlenmittleren Molekulargewicht ($M_n$) von $\geq$ 500 g/mol bis $\leq$ 6000 g/mol und einer zahlenmittleren Funktionalität der Gesamtheit der Komponenten unter b) von $\geq$ 1,8 bis $\leq$ 2,5

c) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5.

Zur Synthese dieses thermoplastischen Polyurethanelastomers (TPU) seien im Einzelnen beispielhaft als Isocyanatkomponente unter a) genannt: aliphatische Diisocyanate wie Ethylendiisocyanat, 1,4-Tetramethylendiisocyant, 1,5-Pentamethylendiisocyanat, 1,6-Hexamethylendiisocyanat, 1,12-Dodecandiisocyanat, cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, außerdem aromatische Diisocyanate, wie 2,4-Toluylendiisocyanat, Gemische aus 2,4-Toluylendiisocyanat und 2,6-Toluylendiisocyanat. 4.4'-Diphenylmethandiisocyanat, 2,4'-Diphenylmethandiisocyanat und 2,2'- Diphenylmethandiisocyanat. Gemische aus 2,4'-Diphenylmethandiisocyanat und 4,4'-Diphenylmethandiisocyanat, urethanmodifizierte flüssige 4,4'- Diphenylmethandiisocyanate oder 2,4'- Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens so viel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Als längerkettige Isocyanat-reaktive Verbindungen unter b) seien beispielhaft solche mit im Mittel mindestens 1,8 bis 3,0 Zerewitinoff-aktiven Wasserstoffatomen und einem zahlenmittleren Molekulargewicht von 500 bis 10000 g/mol genannt. Eingeschlossen sind neben Aminogruppen Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten Mn von 500 bis 6000 g/mol, besonders bevorzugt solche mit einem zahlenmittleren Molekulargewicht Mn von 600 bis 4000 g/mol, z.B. Hydroxylgruppen aufweisende Polyesterpolyole, Polyetherpolyole, Polycaprolactone, Polycarbonatpolyole und Polyesterpolyamide. Geeignete Polyesterdiolen können dadurch hergestellt werden, dass man ein oder mehrere Alkylen Oxide mit 2 bis 4 Kohlenstoffatomen im Alkylen Rest mit einem Startermolekül, das zwei aktive Wasserstoffatome gebunden enthält, umsetzt. Als Alkylen Oxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylen Oxide können einzeln, alternierend nacheinander oder als Mischungen verwendet werden. Als Startermoleküle kommen beispielsweise in Betracht Wasser, Aminoalkohole, wie N-Alkyl- diethanolamine, beispielsweise N-Methyl-diethanolamin und Diole wie Ethylenglykol, 1,3- Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyetherdiole eingesetzt werden, jedoch höchstens in solcher Menge, dass ein noch thermoplastisch verarbeitbares Produkt entsteht. Die im Wesentlichen linearen Polyetherdiole besitzen vorzugsweise zahlenmittlere Molekulargewichte n von 500 bis 6000 g/mol. Sie können sowohl einzeln als auch in Form von Mischungen untereinander zur Anwendung kommen.

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1,4-Butandiol, 1,5-Pentandiol, 1 ,6- Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolacton. Als Polyesterdiole vorzugsweise verwendet werden Ethandiolpolyadipate, 1,4-Butandiolpolyadipate, Ethandiol-1,4-Butandiolpolyadipate, 1,6-Hexandiol-neopentylglykolpolyadipate, 1,6-Hexandiol-1,4-butandiolpolyadipate und Polycaprolactone. Die Polyesterdiole besitzen bevorzugt zahlenmittlere Molekulargewichte Mn von 450 bis 6000 g/mol und können einzeln oder in Form von Mischungen untereinander zur Anwendung kommen.

Die Kettenverlängerungsmittel unter c) besitzen im Mittel 1,8 bis 3,0 Zerewitinoff-aktive Wasserstoffatome und haben ein Molekulargewicht von 60 bis 450 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1,2-Propandiol, 1,3-Propandiol, 1,4-Rutandiol, 2,3- Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(b-hydroxyethyl)-hydrochinon, ethoxylierte Bisphenole, z.B. 1,4-Di(b-hydroxyethyl)- bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4- toluylendiamin oder 3,5-Diethyl-2,6-toluylendiamin oder primäre mono-, di-, tri-oder tetraalkylsubstituierte 4,4'-Diaminodiphenylmethane. Besonders bevorzugt werden als Kettenverlängerer Ethandiol, 1 ,4-Butandiol, 1,6-Hexandiol, 1,4-Di($\beta$-hydroxyethyl)-hydrochinon oder 1,4-Di($\beta$-hydroxyethyl)-bisphenol A verwendet. Es können auch Gemische der oben genannten Kettenverlängerer eingesetzt werden.

Daneben können auch kleinere Mengen an Triolen zugesetzt werden.

Gegenüber Isocyanaten mono funktionelle Verbindungen können unter f) in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die gegenüber Isocyanat reaktiven Substanzen sollten bevorzugt so gewählt werden, dass ihre zahlenmittlere Funktionalität zwei nicht wesentlich überschreitet, wenn thermoplastisch verarbeitbare Polyurethanelastomere hergestellt werden sollen. Falls höherfunktionelle Verbindungen eingesetzt werden, sollte durch Verbindungen mit einer Funktionalität <2 die Gesamtfunktionalität entsprechend herabgesetzt werden.

Die relativen Mengen der Isocyanatgruppen und Isocyanat reaktiven Gruppen werden bevorzugt so gewählt, dass das Verhältnis 0,9: 1 bis 1,2:1 beträgt, bevorzugt 0,95:1 bis 1,1:1.

Die verwendeten thermoplastischen Poyurethanelastomere können als Hilfs-und/oder Zusatzstoffe bis zu maximal 50 Gew.-%, bezogen auf die Gesamtmenge an TPU, der üblichen Hilfs- und Zusatzstoffe enthalten. Typische Hilfs- und Zusatzstoffe sind Katalysatoren, Antiblockmittel, Inhibitoren, Pigmente, Farbstoffe, Flammschutzmittel, Stabilisatoren gegen Alterungs- und Witterungseinflüsse, gegen Hydrolyse, Licht, Hitze und Verfärbung, Weichmacher, Gleit- und Entformungsmittel, fungistatisch und bakteriostatisch wirkende Substanzen, Verstärkungsmittel sowie anorganische und/oder organische Füllstoffe und deren Mischungen. Beispiele für die Zusatzstoffe sind Gleitmittel, wie Fettsäureester, deren Metallseifen, Fettsäureamide, Fettsäureesteramide und Siliconverbindungen, und Verstärkungsmittel, wie z.B. faserartige Verstärkungsstoffe, wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff- Additive von R. Gächter u. H. Müller (Hanser Verlag München 1990) oder der DE-A 29 01 774 zu entnehmen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den eingesetzten TPU beträgt in der Regel etwa 0 bis 5 Gew.-%, bevorzugt 0 bis 2 Gew.-%, bezogen auf die Gesamtmenge an TPU.

In einer weiteren bevorzugten Ausführungsform des Verfahrens ist das schmelzbare Polymer ein thermoplastisches Elastomer und weist einen Schmelzbereich (DSC, differential scanning calorimetry; 2. Aufheizung mit Aufheizrate 5 K/min.) von ≥ 20 °C bis ≤ 100 °C auf und einen Betrag der komplexen Viskosität |η*| (bestimmt durch Viskosimetriemessung in der Schmelze mit einem Platte/Platte-Oszillationsscherviskosimeter bei 100 °C und bei einer Kreisfrequenz von 1/s in Anlehnung an ISO 6721-10:2015-09) von ≥ 10 Pas bis ≤ 1000000 Pas auf. Dieses thermoplastische Elastomer weist einen Schmelzbereich von ≥ 20 °C bis ≤ 100 °C, vorzugsweise von ≥ 25 °C bis ≤ 90 °C und mehr bevorzugt von ≥ 30 °C bis ≤ 80 °C auf. Bei der DSC-Messung zur Bestimmung des Schmelzbereichs wird das Material folgendem Temperaturzyklus unterworfen: 1 Minute bei -60 °C, danach Aufheizen auf 200 °C mit 5 Kelvin/Minute, dann Abkühlen auf -60 °C mit 5 Kelvin/Minute, dann 1 Minute bei -60 °C, dann Aufheizen auf 200 °C mit 5 Kelvin/Minute.

Es ist möglich, dass das Temperaturintervall zwischen Beginn des Schmelzvorgangs und Ende des Schmelzvorgangs, wie es gemäß dem obigen DSC-Protokoll bestimmt werden kann, ≤ 20 °C, bevorzugt ≤ 10 °C und mehr bevorzugt ≤ 5 °C beträgt.

Dieses thermoplastische Elastomer weist ferner einen Betrag der komplexen Viskosität |η*| (bestimmt durch Viskosimetriemessung in der Schmelze mit einem Platte/Platte-Oszillationsviskosimeter gemäß ISO 6721-10:2015-09 bei 100 °C und einer Kreisfrequenz von 1/s) von ≥ 10 Pas bis ≤ 1000000 Pas auf. Vorzugsweise beträgt |η*| ≥ 100 Pas bis ≤ 500000 Pas, mehr bevorzugt ≥ 1000 Pas bis ≤ 200000 Pas. Weiterhin bevorzugt beträgt |η*| ≥ 500 Pas bis ≤ 200000 Pas.

Der Betrag der komplexen Viskosität |η*| beschreibt das Verhältnis der viskoelastischen Moduln *G'* (Speichermodul) und G" (Verlustmodul) zur Anregungsfrequenz ω in einer dynamischmechanischen Materialanalyse:

$$|\eta^*| = \sqrt{\left[\left(\frac{G'}{\omega}\right)^2 + \left(\frac{G''}{\omega}\right)^2\right]} = \frac{|G^*|}{\omega}$$

Dieses thermoplastische Elastomer ist vorzugsweise ein thermoplastisches Polyurethan-Elastomer.

In einer weiteren bevorzugten Ausführungsform des erfindungsgemäßen Verfahrens ist das schmelzbare Polymer ein thermoplastisches Polyurethanelastomer, das erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 °C aufweist.

Gegebenenfalls können bei der Reaktion zu diesem Polyurethan weiterhin Diole des Molekulargewichtsbereichs von ≥ 62 bis ≤ 600 g/mol als Kettenverlängerungsmittel eingesetzt werden.

Diese Polyisocyanatkomponente kann ein symmetrisches Polyisocyanat und/oder ein nichtsymmetrisches Polyisocyanat umfassen. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind ausgewählt aus der Gruppe umfassend: 2,2,4-Trimethyl-hexamethylendiisocyanat, Ethylethylendiisocyanat, nicht-symmetrische Isomere des Dicyclohexylmethandiisocyanat ($H_{12}$-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4'-Diphenylmethandiisocyanat (MDI), 2,4- und 2,6-Toluylendiisocyanat (TDI), Derivate der aufgeführten Diisocyanate, insbesondere dimerisierte oder trimerisierte Typen, oder einer Kombination aus mindestens zwei hiervon.

Bevorzugt sind 4,4'-MDI oder eine Mischung enthaltend IPDI und HDI und/oder PDI als Polyisocyanatkomponente.

Diese Polyolkomponente weist ein Polyesterpolyol auf, welches einen Stockpunkt (No Flow Point, ASTM D5985) von ≥ 25 °C, vorzugsweise ≥ 35 °C, mehr bevorzugt ≥ 35 °C bis ≤ 55 °C aufweist. Zur Bestimmung des Stockpunkts wird ein Messgefäß mit der Probe in eine langsame Rotation (0.1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Beispiele für Polyesterpolyole, welche solch einen Stockpunkt aufweisen können, sind Reaktionsprodukte von Phthalsäure, Phthalsäureanhydrid oder symmetrischen α,ω-$C_4$- bis $C_{10}$-Dicarbonsäuren mit einem oder mehreren $C_2$- bis $C_{10}$-Diolen. Sie weisen bevorzugt ein zahlenmittleres Molekulargewicht $M_n$ von ≥ 400 g/mol bis ≤ 6000 g/mol auf. Geeignete Diole sind insbesondere Monoethylenglykol, 1,4-Butandiol, 1,6-Hexandiol und Neopentylglykol.

Bevorzugte Polyesterpolyole sind nachfolgend unter Angabe ihrer Säure- und Diolkomponenten angegeben: Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol. Bevorzugte Polyurethane werden aus einer Mischung enthaltend IPDI und HDI als Polyisocyanatkomponente und einer Polyolkomponente enthaltend ein zuvor genanntes bevorzugtes Polyesterpolyol erhalten. Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane.

Es ist ferner bevorzugt, dass diese Polyesterpolyole eine OH-Zahl (DIN 53240) von ≥ 25 bis ≤ 170 mg KOH/g und/oder eine Viskosität (75 °C, DIN 51550) von ≥ 50 bis ≤ 5000 mPas aufweisen.

Als Beispiel genannt sei ein Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von ≥ 1:4 bis ≤ 4:1 erhältlich ist und welches ein zahlenmittleres Molekulargewicht $M_n$ (GPC, gegen Polystyrol-Standards) von ≥ 4000 g/mol bis ≤ 6000 g/mol aufweist. Solch ein Polyurethan kann einen Betrag der komplexen Viskosität $|\eta^*|$ (bestimmt durch Viskosimetriemessung in der Schmelze mit einem Platte/Platte-Oszillationsviskosimeter gemäß ISO 6721-10:2015-09 bei 100 °C und einer Kreisfrequenz von 1/s) von ≥ 4000 mPas bis ≤ 160000 mPas aufweisen.

Ein weiteres Beispiel für ein geeignetes Polyurethan ist:

1. Weitgehend lineare, endständige Hydroxylgruppen aufweisende Polyesterpolyurethane wie in EP 0192946 A1 beschrieben, hergestellt durch Umsetzung von

a) Polyesterdiolen eines über 600 liegenden Molekulargewichts und gegebenenfalls

b) Diolen des Molekulargewichtsbereichs von 62 bis 600 g/mol als Kettenverlängerungsmittel mit

c) aliphatischen Diisocyanaten

unter Einhaltung eines Äquivalentverhältnisses von Hydroxylgruppen der Komponenten a) und b) zu Isocyanatgruppen der Komponente c) von 1:0,9 bis 1:0,999, wobei die Komponente a) zu mindestens 80 Gew.-% aus Polyesterdiolen des Molekulargewichtsbereichs 4000 bis 6000 auf Basis von (i) Adipinsäure und (ii) Gemischen aus 1,4-Dihydroxybutan und 1,6-Dihydroxyhexan im Molverhältnis der Diole von 4:1 bis 1:4 besteht.

In den unter 1. genannten Polyesterpolyurethanen ist bevorzugt, dass die Komponente a) zu 100 % aus einem Polyesterdiol des Molekulargewichtsbereichs 4000 bis 6000 besteht, bei deren Herstellung als Diolgemisch ein Gemisch aus 1,4-Dihydroxybutan und 1,6-Dihydroxyhexan im Molverhältnis von 7:3 bis 1:2 verwendet worden ist.

In den unter 1. genannten Polyesterpolyurethanen ist ferner bevorzugt, dass die Komponente c) IPDI und weiterhin HDI enthält.

In den unter 1. genannten Polyesterpolyurethanen ist ferner bevorzugt, dass bei ihrer Herstellung als Komponente b) Alkandiole, ausgewählt aus der Gruppe bestehend aus: 1,2-Dihydroxyethan, 1,3-Dihydroxypropan, 1,4-Dihydroxybutan, 1,5-Dihydroxypentan, 1,6-Dihydroxyhexan oder einer Kombination aus mindestens zwei hiervon, in einer Menge von bis zu 200 Hydroxyläquivalentprozent, bezogen auf die Komponente a), mitverwendet worden sind.

Es ist ferner möglich, dass das thermoplastische Elastomer nach Erwärmen auf 100 °C und Abkühlen auf 20 °C bei einer Abkühlrate von 4 °C/min in einem Temperaturintervall von 25 °C bis 40 °C für $\geq$ 1 Minute (bevorzugt $\geq$ 1 Minute bis $\leq$ 30 Minuten, mehr bevorzugt $\geq$ 10 Minuten bis $\leq$ 15 Minuten), ein Speichermodul G' (bestimmt bei der jeweils herrschenden Temperatur mit einem Platte/Platte-Oszillationsviskosimeter angelehnt an ISO 6721-10:2015-09 bei einer Kreisfrequenz von 1/s) von $\geq$ 100 kPa bis $\leq$ 1 MPa auf und nach Abkühlen auf 20 °C und Lagerung für 20 Minuten ein Speichermodul G' (bestimmt bei 20 °C mit einem Platte/Platte-Oszillationsviskosimeter angelehnt an ISO 6721-10:2015-09 bei einer Kreisfrequenz von 1/s) von $\geq$ 10 MPa aufweist.

In einer weiteren bevorzugten Ausführungsform des Verfahrens ist das Substrat als bewegliches Förderband mit einer die Schicht mit Partikeln tragenden Seite ausgebildet. Dieses ermöglicht einen kontinuierlichen oder quasi-kontinuierlichen Betrieb des Verfahrens.

In einer weiteren bevorzugten Ausführungsform wird für jeden Durchlauf der Schritte V) bis VIII) Schicht ein unterschiedliches Substrat und/oder eine Schicht mit einem unterschiedlichen schmelzbaren Polymer eingesetzt. Dieses kann beispielsweise dadurch erfolgen, dass die verschiedenen schmelzbaren Polymere nebeneinander auf einem Förderband vorgelegt werden und im Verfahren zwischen den einzelnen Bereichen hin- und hergewechselt wird. Insbesondere können für jeden Durchlauf der Schritte V) bis VIII) unterschiedliche Partikel mit schmelzbarem Polymer eingesetzt werden.

In einer weiteren bevorzugten Ausführungsform erfolgt in Schritt I) und/oder Schritt V) das Bereitstellen der Schicht auf dem Substrat derart, dass die bereitgestellte Schicht zuzüglich erweiterter Ränder dem ausgewählten Querschnitt des Gegenstands entspricht. So kann das ganze Substrat nicht flächendecken mit einer Pulverschicht beschichtet werden, sondern nur ausgewählte Bereiche, die in einer weiteren bevorzugten Ausführungsform mit den im späteren Kontaktierungsschritt gewünschten Bereichen übereinstimmen.

In einer weiteren bevorzugten Ausführungsform wird der jeweils ausgewählte Querschnitt des Gegenstands in eine Mehrzahl von Volumenelementen (Voxel) unterteilt, die Schicht mit dem schmelzbaren Polymer ist als Pulverschicht ausgeführt, die Pulverschicht weist eine Mehrzahl von schmelzbaren Polymeren auf und die Zusammensetzung der Pulverschicht für ein Voxel unterscheidet sich wenigstens von der Zusammensetzung der Pulverschicht für ein weiteres Voxel. Insbesondere werden nur ausgewählte Bereiche einer Pulverschicht auf das Substrat aufgetragen, welche voxelgenau unterschiedliche Materialien enthalten, die spezifisch nach ihren Schmelztemperaturen von einem Laser aufgeschmolzen werden. Der voxelgenaue Auftrag von verschiedenen Materialien auf eine Substratoberfläche kann z. B. durch einen Pulverdruckprozess analog einem klassischen Inkjetdruckprozess erfolgen, wobei mehrere unabhängige Druckköpfe und unabhängige Pulvermaterialien eingesetzt werden können. Auf diese Weise kann zum Beispiel durch unterschiedlich eingefärbte Pulver ein Vollfarbdruck günstig realisiert werden.

In einer weiteren bevorzugten Ausführungsform wird der jeweils ausgewählte Querschnitt des Gegenstands in eine Mehrzahl von Volumenelementen (Voxel) unterteilt, die Schicht mit dem schmelzbaren Polymer ist als Pulverschicht ausgeführt und ein flüssiger Aktivator (der gezielt die notwendig eingestrahlte Energie für den Schmelzprozess erniedrigt) wird selektiv auf ausgewählte Voxel aufgetragen. So kann die Pulverschicht auf das Substrat aufgetragen und voxelgenau mit einem flüssigen Aktivator versehen werden, der gezielt die notwendig eingestrahlte Energie für den Schmelzprozess erniedrigt (Lösungsmittel, Weichmacher, Absorptionsverstärker). Diese Ausführungsform ist zum Beispiel für einen Highspeed Sintering Prozess, wo eine Flächenbestrahlung als Aktivierungsmittel eingesetzt wird, vorteilhaft. In einer weiteren besonderen Ausführungsform werden dabei Aktivatoren und Inhibitoren voxelgenau auf die Pulverschicht aufgetragen, um einer bessere Randschärfe beim Aktivierungsprozess zu erhalten.

In einer weiteren bevorzugten Ausführungsform wird der jeweils ausgewählte Querschnitt des Gegenstands in eine Mehrzahl von Volumenelementen (Voxel) unterteilt, die Schicht mit dem schmelzbaren Polymer ist als Pulverschicht ausgeführt und ein Adhäsionsvermittler wird selektiv auf ausgewählte Voxel aufgetragen. So kann eine voxelgenaue Klebrigkeit durch gezielten Auftrag eines (reaktiv) Klebstoffes oder Lösungsmittel erreicht, der nur die gewünschten spezifischen Bereiche klebrig macht und damit im Kontaktierungsschritt einen Aufbau der gewünschten 3D-Strukturen erlaubt.

In einer weiteren bevorzugten Ausführungsform liegt anstelle eines Pulvers eine thermoplastische Beschichtung auf einem Substrat vor, die wie zuvor erläutert gezielt voxelgenau aufgeschmolzen und kontaktiert wird. In dieser speziellen Ausführungsform sind besonders in der Schmelze niedrigviskose Materialien mit einer Schmelzviskosität von < 1000 Pas, bevorzugt < 100 Pas, mehr bevorzugt < 10 Pas (bestimmt durch Viskosimetriemessung mit einem Platte/Platte-Oszillationsscherviskosimeter bei einer Kreisfrequenz von 1/s in Anlehnung an ISO 6721-10:2015-09 bei einer Temperatur von 20°C oberhalb der Schmelztemperatur).

In einer weiteren bevorzugten Ausführungsform wird eine Mehrzahl von Energiestrahlen in Schritten II) und VI) eingesetzt, welche aus einer Mehrzahl Vielzahl von Photo- oder Laserdioden stammen und die derart angeordnet sind, dass sie mit > 10 DPI (dots per inches) aufgelöste Strahlungsbilder auf die Pulverschicht aufgeben können. Vorzugsweise entstehen die Strahlungsbilder über einen Prozess analog zu einem DLP-Beamer mittels einer oder mehrerer fokussierter starker Strahlungsquellen, die mit einer Mehrzahl beweglicher Spiegel Zeilenund/oder Flächengebilde projizieren.

Die Erfindung betrifft weiterhin ein System nach Anspruch 12 zur Durchführung des erfindungsgemäßen Verfahrens.

In einer bevorzugten Ausführungsform ist das Substrat als bewegliches Förderband mit einer eine Schicht mit Partikeln tragenden Seite ausgebildet und diese Seite weist eine Bewegungsrichtung auf, die Energie-Einwirkungseinheit ist als Bestrahlungseinheit ausgebildet, die Applikationseinheit ist in Bewegungsrichtung des Substrats gesehen vor der Energie-Einwirkungseinheit angeordnet und die Energie-Einwirkungseinheit ist in Bewegungsrichtung des Substrats gesehen vor der Kontaktierungseinheit angeordnet.

Solch eine Konfiguration kann im kontinuierlichen oder quasi-kontinuierlichen Betrieb eingesetzt werden. In einem quasi-kontinuierlichen Betrieb kann das Förderband für die Bestrahlungs- und die Kontaktierungsschritte angehalten werden und nach Abschluss dieser Schritte sich weiterbewegen. Ein kontinuierlicher Betrieb kann durch bewegliche Bestrahlungs- und Kontaktierungseinheiten erreicht werden, welche sich mit der gleiche Geschwindigkeit und in der gleichen Richtung wie das Förderband während der Bestrahlungs- und Kontaktierungsschritte bewegen.

In einer weiteren bevorzugten Ausführungsform ist das Substrat mit einer thermoplastischen Beschichtung ausgestattet, welche als Schicht mit schmelzbarem Polymer im Sinne der vorliegenden Erfindung fungiert. Vorteilhaft bei dieser Ausführung ist, dass die Schichtdicke gegenüber einer Pulvermethode signifikant kleiner gewählt werden kann, da keine Gefahr durch Stäube besteht. Entsprechend sind höher aufgelöste Produkte in allen 3 Raumrichtungen, verglichen mit herkömmlichen Pulververfahren, denkbar.

In einer weiteren bevorzugten Ausführungsform bewegt sich das Substrat für jede einzelne aufzubauende Schicht des Gegenstands zwischen Kontaktierungseinheit, Energie-Einwirkungseinheit und Applikationseinheit hin und her.

Es ist bevorzugt, dass das Substrat als bewegliches Förderband mit einer die Schicht mit Partikeln tragenden Seite ausgebildet ist, wobei diese Seite eine Bewegungsrichtung aufweist, die Applikationseinheit ist in Bewegungsrichtung des Substrats gesehen vor der Bestrahlungseinheit angeordnet ist und die Bestrahlungseinheit in Bewegungsrichtung des Substrats gesehen vor der Kontaktierungseinheit angeordnet ist.

In einer besonderen Ausführungsform können > 60 %, bevorzugt > 70%, bevorzugt > 80%, besonders bevorzugt > 90% des eingesetzten Pulvermaterials oder Beschichtungsmaterials wiederverwendet werden, da sie einer deutlich geringeren und kurzfristigeren thermischen Belastung ausgesetzt sind.

In einer besonderen Ausführungsform kann der Vorgang und Umgebungsluft durchgeführt werden, da oxidative Prozesse durch die kürzere thermische Belastung in viel geringerem Maße relevant sind weshalb Verfärbungen und andere unerwünschte Veränderung des Materials in viel geringerem Umfang vorkommen.

Die vorliegende Erfindung wird anhand der nachfolgenden Figuren näher erläutert, ohne jedoch darauf beschränkt zu sein. Es zeigen:

FIG. 1-8     Schritte des erfindungsgemäßen Verfahrens

FIG. 9-14    Schritte einer Variante des erfindungsgemäßen Verfahrens

FIG. 15      ein erfindungsgemäßes System

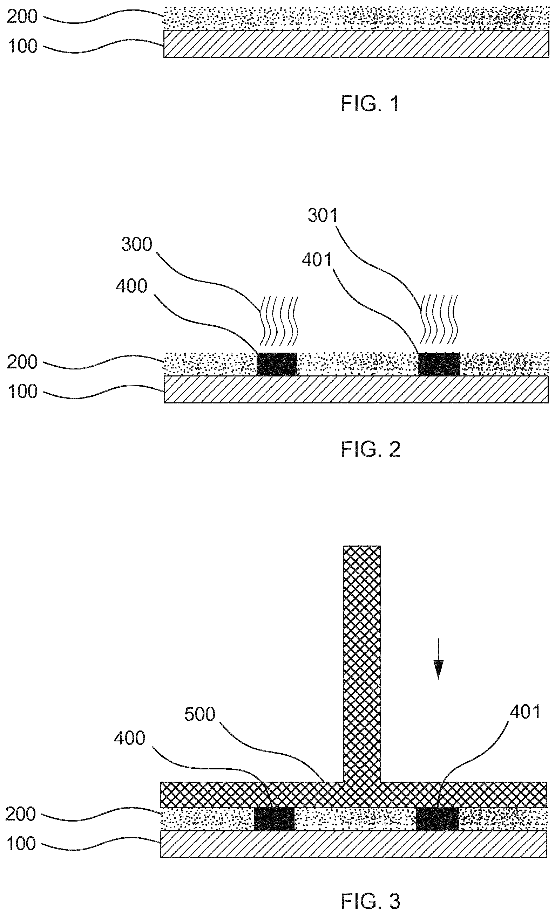

FIG. 1 zeigt schematisch Schritt I) des erfindungsgemäßen Verfahrens, in welchem der Aufbau der ersten Schicht des herzustellenden Gegenstandes initiiert wird. Eine Schicht mit Partikeln 200 wird auf ein Substrat 100 aufgetragen. Dieses kann durch Aufrakeln der Partikel erfolgen.

Anschließend wird gemäß Schritt II), wie in FIG. 2 dargestellt, die Schicht 200 bestrahlt. Dieses erfolgt gemäß einem ersten ausgewählten Querschnitt des Gegenstandes mittels als Laserstrahlen ausgebildete Energiestrahlen 300, 301. Dort, wo die Laserstrahlen 300, 301 auf die Partikelschicht 200 einwirken, werden die Partikel beziehungsweise das in ihnen vorliegende schmelzbare Polymer so aufgeschmolzen, dass sie sich zu Volumina 400 und 401 untereinander verbinden. Durch das Aufschmelzen wird das schmelzbare Polymer weiterhin klebrig.

Die in FIG. 1 bis 14 dargestellten Schritte des erfindungsgemäßen Verfahrens sind schematischer Natur, was das Schmelzen der Partikel betrifft. Ein mögliches Verhalten von einsetzbaren Materialien im erfindungsgemäßen Verfahren ist, das ausgehend vom Pulver die Pulverschmelze eine um > 10% höhere Dichte hat als das Pulver, weshalb ein Meniskus der Schmelze typischerweise unterhalb der ursprünglichen Pulverfläche steht und der Kontaktierungsprozess eine Teilkompression und/oder Verschiebung der Pulverfläche beinhaltet. Solch ein Verhalten ist erfindungsgemäß mit eingeschlossen.

Bevor das zuvor aufgeschmolzene Material wieder in einen nicht-klebrigen Zustand übergehen kann, wird gemäß Schritt III), wie in FIG. 3 dargestellt, ein Stempel ausgebildeter Träger 500 auf das Material abgesenkt. Der Stempel 500 kontaktiert die durch das Aufschmelzen erhaltenen Volumina 400 und 401. Hierbei verbinden sich diese Volumina aufgrund ihrer Klebrigkeit mit der sie kontaktierenden Oberfläche des Stempels 500.

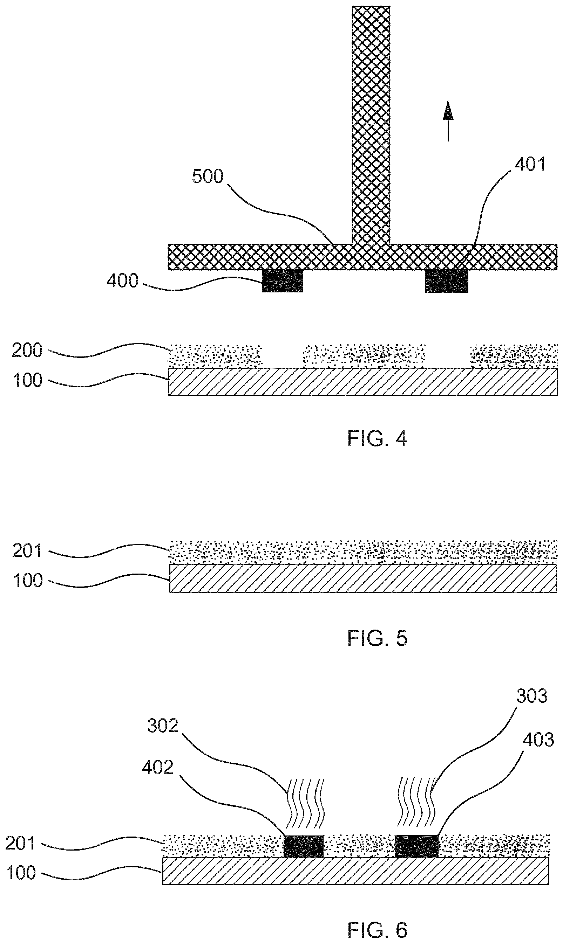

Anschließend wird gemäß Schritt IV)/FIG. 4 der Stempel 500 vertikal nach oben bewegt, um die Volumina 400 und 401 vom Substrat 100 aufzunehmen. Dort, wo die Partikelschicht 200 nicht durch Lasereinwirkung aufgeschmolzen wurde, verbleibt diese intakt.

Nachdem der erste Querschnitt des herzustellenden Gegenstandes mit dem Stempel 500 verbunden ist, können sich nun weitere Querschnittslagen mit bereits auf dem Stempel 500 befindlichem Material verbinden. Dieses wird so lange durchgeführt, bis der herzustellende Gegenstand erhalten wird.

Gemäß FIG. 5/Schritt V) wird eine neue vollständige Partikelschicht 201 auf dem Substrat 100, beispielsweise wieder durch Aufrakeln, bereitgestellt.

Gemäß FIG. 6/Schritt VI) wird ein ausgewählter Teil der Partikelschicht 201, entsprechend einem weiteren ausgewählten Querschnitt des herzustellenden Gegenstandes, mittels als Laserstrahlen ausgebildeten Energiestrahlen 302, 302 bestrahlt. Die Partikel beziehungsweise das in ihnen vorliegende schmelzbare Polymer werden so aufgeschmolzen, dass sie sich zu Volumina 402 und 403 untereinander verbinden. Auch wird das schmelzbare Polymer durch das Aufschmelzen in einen klebrigen Zustand überführt.

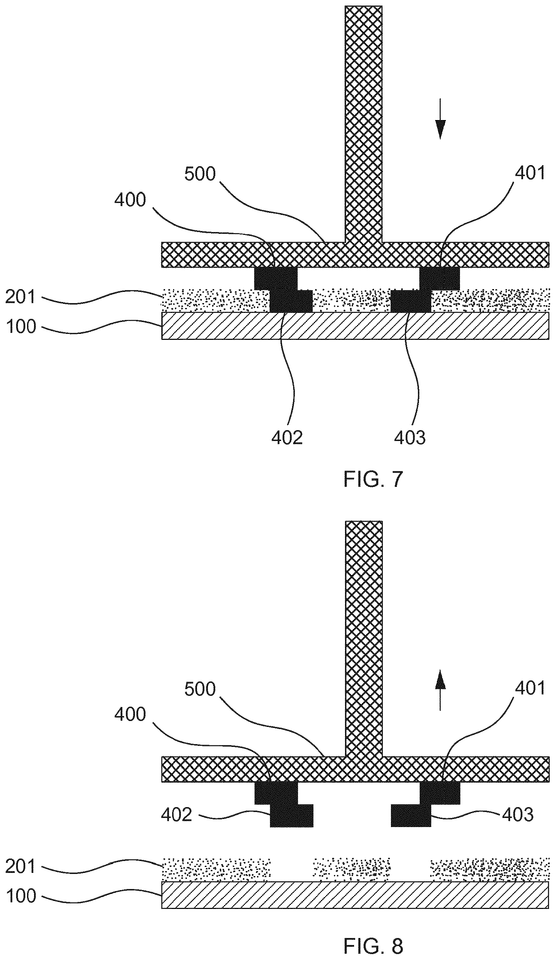

FIG. 7/Schritt VII) zeigt, wie der Stempel 500 mitsamt den an ihm haftenden Volumina 400 und 401 abgesenkt wird, damit die Volumina 400 und 401 die aufgeschmolzenen Volumina 402 und 403 unter Ausbildung einer Verbindung untereinander kontaktieren können.

Anschließend wird gemäß FIG. 8/Schritt VIII) der Stempel 500 angehoben. Da sich Volumen 402 mit Volumen 400 und Volumen 403 mit Volumen 401 verbunden haben, werden sie ebenfalls mit angehoben und vom Substrat 100 abgelöst.

Dieser Zyklus - Auftragen einer Partikelschicht, Bestrahlen, Kontaktieren und Ablösen - wird nun so lange durchgeführt, bis der Gegenstand gebildet ist.

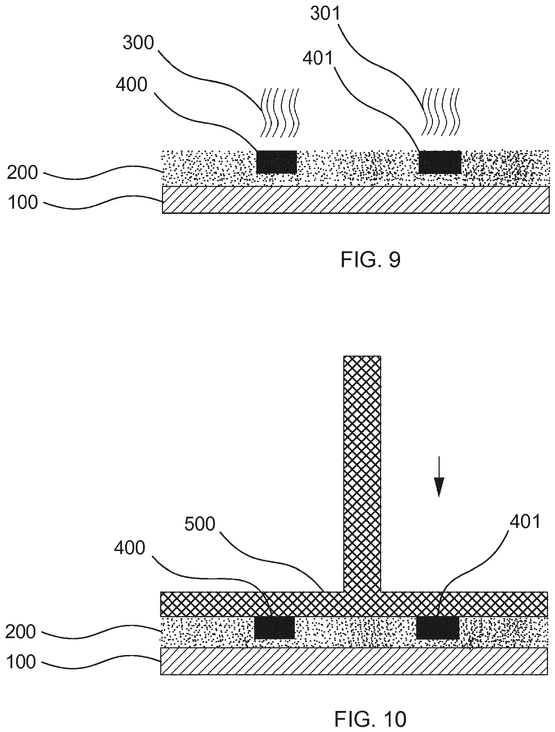

In FIG. 9 bis 14 wird eine bevorzugte Ausführungsform des erfindungsgemäßen Verfahrens schematisch beschrieben. In dieser Ausführungsform werden die Aufschmelzschritte II) (für die erste Lage) und VI) (für alle nachfolgenden Lagen) so durchgeführt, dass die nach dem Aufschmelzen erhaltenen Volumina das Substrat nicht kontaktieren. Dann befindet sich zwischen den Volumina und dem Substrat noch eine Partikelschicht, wodurch die Haftung zwischen den Volumina und dem Substrat praktisch nichtexistent ist.

FIG. 9 zeigt den Aufschmelzschritt II), in dem die eingetragene Energie der Laser 300, 301 so bemessen wird, dass zwischen den Volumina 400 und 401 und dem Substrat 100 noch nicht aufgeschmolzene Partikelschichten verbleiben.

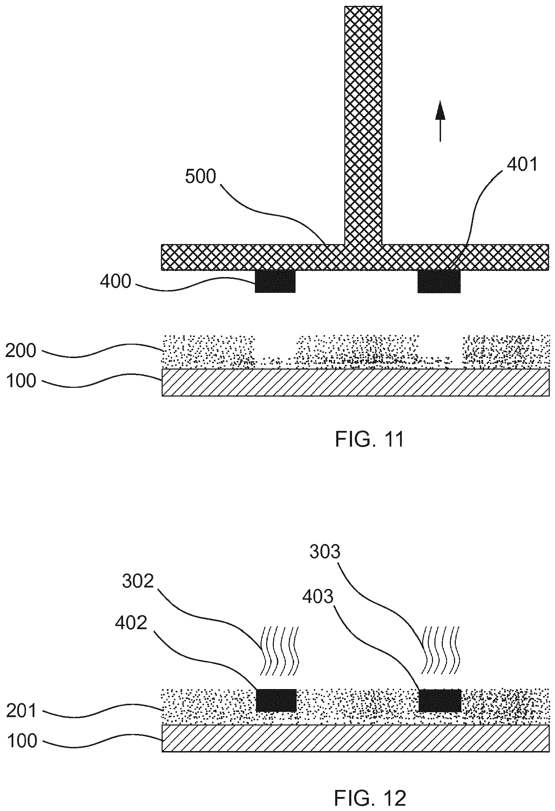

Nach dem Kontaktieren der Volumina 400 und 401 mit dem Stempel 500 (FIG. 10) erfolgt das Anheben des Stempels 500 unter Mitnahme der Volumina 400 und 401 (FIG. 11).

FIG. 12 zeigt, wie nach einem erneuten Auftragen der Partikelschicht 201 (vgl. FIG. 5/Schritt V)) im Aufschmelzschritt VI) die Laserstrahlen 302 und 304 das schmelzbare Polymer in ausgewählten Bereiche der Partikelschicht zu Volumina 402 und 403 aufschmelzen, wobei wiederum zwischen Volumina 402 und 403 und dem Substrat nicht aufgeschmolzene Partikelschichten verbleiben.

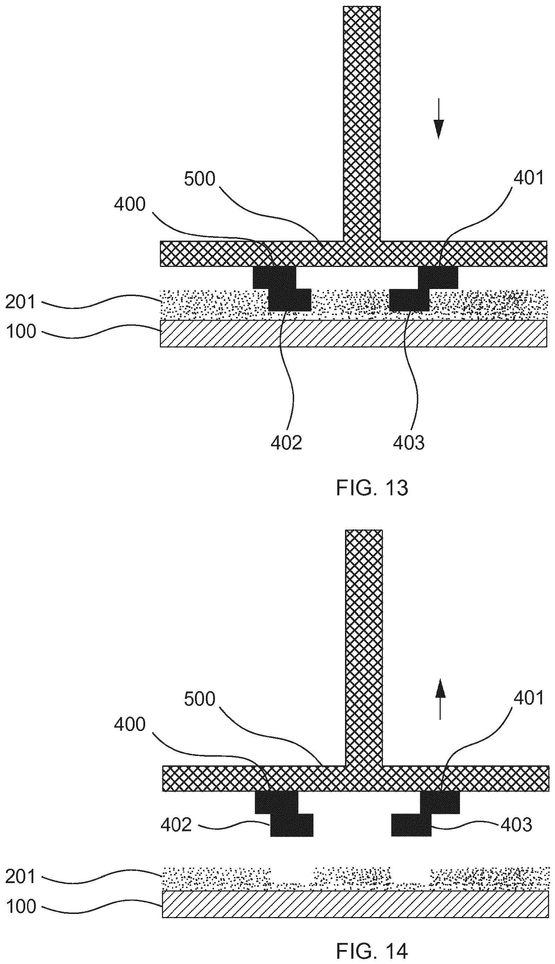

Die Kontaktierung der erhaltenen Volumina 402 und 403 mit bereits mit dem Stempel 500 verbundenen Volumina 400 und 401 (FIG. 13) sowie das Anheben des Stempels unter Mitnahme der Volumina 402 und 403 (FIG. 14) erfolgen analog zu den in FIG. 7 und 8 gezeigten Vorgängen.

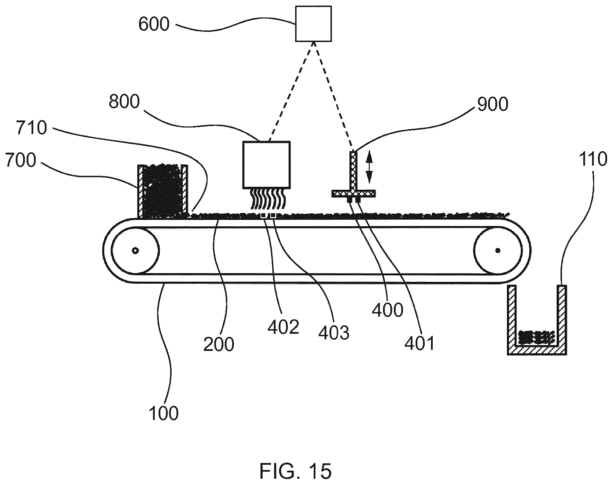

FIG. 15 zeigt ein erfindungsgemäßes System. In dem System ist das Substrat 100 als bewegliches, umlaufendes Förderband ausgebildet. Die Bewegungsrichtung der nach oben gewandten Seite des Substrats 100 ist in der Figur von links nach rechts.

Die Applikationseinheit 700 dient auch als Vorratsbehälter für die Partikel mit schmelzbarem Polymer. Über einen Spalt 710 gelangen die Partikel auf das sich bewegende Substrat 100 und bilden so die Partikelschicht 200. Über die Höhe des Spalts 710 lässt sich die Höhe der Partikelschicht steuern.

Die Bestrahlungseinheit 800 bestrahlt, auf Anweisung von Befehlen aus der Steuerungseinheit 600, einen ausgewählten Teil der Partikelschicht 200. Der bidirektionale Fluss von Befehlen und Regelungsdaten ist durch die gestrichelte Linie zwischen Steuerungseinheit 600 und Bestrahlungseinheit 800 dargestellt.

Durch das Bestrahlen werden die aufgeschmolzenen Volumina 402 und 403 gebildet. Diese werden durch die Bewegung des Substrats 100 weiter zur in Bewegungsrichtung des Substrats gesehen hinter der Bestrahlungseinheit 800 positionierten Kontaktierungseinheit 900 transportiert.

Die als Stempel ausgebildete Kontaktierungseinheit 900 kann sich auf Anweisung von Befehlen aus der Steuerungseinheit 600 auf und ab bewegen und so die unter ihr befindlichen Volumina des zumindest teilweise aufgeschmolzenen Materials kontaktieren. Dieses erfolgt, solange das Material noch eine genügend große Klebrigkeit aufweist. Der bidirektionale Fluss von Befehlen und Regelungsdaten ist durch die gestrichelte Linie zwischen Steuerungseinheit 600 und Kontaktierungseinheit 900 dargestellt.

Wenn die zuvor gebildeten Volumina 402 und 403 unterhalb der Kontaktierungseinheit 900 angelangt sind, bewegt sich diese herab. Hierbei kommt es zu einer Adhäsion zwischen den Volumina 402 und 403 sowie den bereits an der Kontaktierungseinheit 900 haftenden Volumina 400 und 401.

Die nicht bestrahlten Anteile der Partikelschicht 200 werden durch die Bewegung des Substrats 100, gegebenenfalls in Kombination mit einer nicht dargestellten Rakel, in einen Auffangbehälter 110 transportiert. Dann können sie gegebenenfalls nach einem Filtrationsprozess, der verklumpte Anteile aussortiert einer Wiederverwertung zugeführt werden, insbesondere indem sie in die Applikationseinheit 700 umgefüllt werden.

## Patentansprüche

1. Verfahren zur Herstellung eines Gegenstandes, umfassend die Schritte:

I) Bereitstellen einer Schicht (200) auf einem Substrat (100), wobei die Schicht (200) ein schmelzbares Polymer enthält;

II) Einwirken von Energie auf einen ausgewählten Teil der in Schritt I) bereitgestellten Schicht (200), entsprechend einem ersten ausgewählten Querschnitt des Gegenstandes, so dass die Schicht (200) im ausgewählten Teil zumindest teilweise aufgeschmolzen wird und mindestens ein zumindest teilweise aufgeschmolzenes Volumen (400, 401) erhalten wird;

III) Kontaktieren des mindestens einen in Schritt II) erhaltenen Volumens (400, 401) mit einem Träger (500), so dass das mindestens eine Volumen (400, 401) mit dem Träger (500) verbunden werden;

IV) Entfernen des Trägers (500) einschließlich dem mindestens einen mit dem Träger (500) verbundenem Volumen (400, 401) von dem Substrat (100);

V) Bereitstellen einer weiteren Schicht (201) auf dem Substrat (100) oder einem weiteren Substrat, wobei die Schicht (201) ein schmelzbares Polymer enthält;

VI) Einwirken von Energie auf einen ausgewählten Teil der in Schritt V) bereitgestellten Schicht (201), entsprechend einem weiteren ausgewählten Querschnitt des Gegenstandes, so dass die Schicht (201) im ausgewählten Teil zumindest teilweise aufgeschmolzen wird und mindestens ein zumindest teilweise aufgeschmolzenes Volumen (402, 403) erhalten wird;

VII) Kontaktieren des mindestens einen in Schritt VI) erhaltenen Volumens (402, 403) mit mindestens einem des zuvor mit dem Träger (500) verbundenen Volumen (400, 401), so dass das in Schritt VI) erhaltene Volumen (402, 403) mit mindestens einem der zuvor mit dem Träger (500) verbundenen Volumina (400, 401) verbunden wird;

VIII) Entfernen des Trägers (500) einschließlich der mit dem Träger (500) verbundenen Volumina (400, 401, 402, 403) von dem Substrat (100);

IX) Wiederholen der Schritte V) bis VIII), bis der Gegenstand gebildet ist, **dadurch gekennzeichnet, daß** das Kontaktieren in Schritt III) und/oder Schritt VII) derart durchgeführt wird, dass eine Relativbewegung des Trägers (500) zum Substrat (100) durchgeführt wird, der Anpressdruck zwischen Träger (500) und Substrat (100) und/oder zwischen Träger (500) und Oberfläche der Schicht (200, 201) überwacht wird und die Relativbewegung bei Überschreiten eines vorbestimmten Anpressdrucks unterbrochen wird.

2. Verfahren gemäß Anspruch 1, wobei die Schritte II) und/oder VI) derart durchgeführt werden, dass das Einwirken von Energie auf den ausgewählten Teil der Schicht (200, 201) durch Bestrahlen mit einem Energiestrahl oder mehreren Energiestrahlen (300, 301, 302, 303) erfolgt.

3. Verfahren gemäß Anspruch 1, wobei die Schritte II) und/oder VI) derart durchgeführt werden, dass zunächst eine Flüssigkeit auf den ausgewählten Teil der Schicht (200, 201) aufgetragen wird, wobei die Flüssigkeit die Absorption von Energie in den von ihr kontaktierten Bereichen der Schicht (200, 201) relativ zu den nicht von ihr kontaktierten Bereichen erhöht und anschließend die Schicht (200, 201) einer Energiequelle ausgesetzt wird.

4. Verfahren gemäß einem der Ansprüche 1 bis 3, wobei die Schritte I) und/oder V) derart durchgeführt werden, dass eine Schicht mit Partikeln (200, 201) auf das Substrat (100) aufgetragen wird, wobei die Partikel ein schmelzbares Polymer enthalten.

5. Verfahren gemäß einem der Ansprüche 1 bis 3, wobei die Schritte I) und/oder V) derart durchgeführt werden, dass ein Film enthaltend ein schmelzbares Polymer bereitgestellt wird, wobei der Film auf einer Trägerfolie als Substrat angeordnet ist.

6. Verfahren gemäß einem der Ansprüche 1 bis 5, wobei das schmelzbare Polymer derart ausgewählt ist, dass ein Tropfen des schmelzbaren Polymers im geschmolzenen Zustand einen Kontaktwinkel zu dem im Verfahren eingesetzten Substrat (100) von $\geq 60°$ bis $\leq 180°$ aufweist
und/oder
das schmelzbare Polymer derart ausgewählt ist, dass ein Tropfen des schmelzbaren Polymers im geschmolzenen Zustand einen Kontaktwinkel zu dem im Verfahren eingesetzten Träger (500) von $\geq 0°$ bis $\leq 90°$ aufweist,
wobei die Kontaktwinkelmessung mittels optischer Methoden bei einer Temperatur von 20 °C oberhalb der Schmelztemperatur des Polymers durchgeführt wird.

7. Verfahren gemäß einem der Ansprüche 1 bis 6, wobei die Schritte II) und/oder VI) derart durchgeführt werden, dass das mindestens eine erhaltene Volumen (400, 401, 402, 403) nicht das Substrat (100) kontaktiert.

**8.** Verfahren gemäß einem der Ansprüche 4 bis 7, wobei die Schritte II) und/oder VI) derart durchgeführt werden, dass nach dem zumindest teilweisen Aufschmelzen der Partikel deren aufgeschmolzenes Material bei einer Temperatur von ≥ 20°C oberhalb des Schmelzpunktes ihres Materials einen Speichermodul G', bestimmt durch Viskosimetriemessung mit einem Platte/Platte-Oszillationsscherviskosimeter bei einer Kreisfrequenz von 1/s, von ≥ 5 · $10^3$ Pa bis ≤ 1 · $10^7$ Pa aufweist.

**9.** Verfahren gemäß einem der Ansprüche 1 bis 8, wobei die Schritte III) und/oder VII) derart durchgeführt werden, dass zuvor mit dem Träger (500) verbundene Volumina (400, 401) einen Speichermodul G', bestimmt durch Viskosimetriemessung mit einem Platte/Platte-Oszillationsscherviskosimeter bei einer Kreisfrequenz von 1/s, von > 1 · $10^7$ Pa aufweisen.

**10.** Verfahren gemäß einem der Ansprüche 1 bis 9, wobei das schmelzbare Polymer ausgewählt ist aus der Gruppe bestehend aus Polyurethan, Polyester, Polyalkylenoxid, weichgemachtes PVC, Polyamid, Protein, PEEK, PEAK, Polypropylen, Polyethylen, Thermoplastisches Elastomer, POM, Polyacrylat, Polymethylmethacrylat, Polystyrol, Polycarbonat oder einer Kombination aus mindestens zwei hiervon.

**11.** Verfahren gemäß einem der Ansprüche 1 bis 10, wobei das Substrat (100) als bewegliches Förderband mit einer die Schicht mit Partikeln (200, 201) tragenden Seite ausgebildet ist.

**12.** System zur Durchführung des Verfahrens gemäß einem der Ansprüche 1 bis 11, umfassend:

> - eine Steuerungseinheit (600);
> - ein Substrat (100);
> - eine Applikationseinheit (700) zum Bereitstellen einer Schicht (200, 201) auf einem Substrat (100), wobei die Schicht (200, 201) ein schmelzbares Polymer enthält;
> - eine Energie-Einwirkungseinheit (800) zum Einwirken von Energie auf einen ausgewählten Teil der Schicht (200, 201), entsprechend einem ausgewählten Querschnitt eines herzustellenden Gegenstandes, so dass die Schicht im ausgewählten Teil zumindest teilweise aufgeschmolzen werden und ein zumindest teilweise aufgeschmolzenes Volumen oder mehrere zumindest teilweise aufgeschmolzene Volumina (400, 401, 402, 403) erhalten werden;
> - eine Kontaktierungseinheit (900) zum Kontaktieren des durch die Energie-Einwirkungseinheit erhaltenen Volumens oder Volumina (400, 401) und zum Entfernen dieses Volumens oder Volumina (400, 401, 402, 403) vom Substrat (100);

wobei die Energie-Einwirkungseinheit (800) das Einwirken auf Anweisung der Steuerungseinheit (700) durchführt und die Kontaktierungseinheit (900) das Kontaktieren auf Anweisung der Steuerungseinheit (700) durchführt und **dadurch gekennzeichnet, daß** das Kontaktieren derart durchgeführt wird, dass eine Relativbewegung eines Trägers (500) zum Substrat (100) durchgeführt wird, der Anpressdruck zwischen Träger (500) und Substrat (100) und/oder zwischen Träger (500) und Oberfläche der Schicht (200, 201) überwacht wird und die Relativbewegung bei Überschreiten eines vorbestimmten Anpressdrucks unterbrochen wird.

**13.** System gemäß Anspruch 12, wobei das Substrat (100) als bewegliches Förderband mit einer eine Schicht mit Partikeln (200, 201) tragenden Seite ausgebildet ist und diese Seite eine Bewegungsrichtung aufweist; die Energie-Einwirkungseinheit (800) als Bestrahlungseinheit ausgebildet ist; die Applikationseinheit (700) in Bewegungsrichtung des Substrats (100) gesehen vor der Energie-Einwirkungseinheit (800) angeordnet ist und die Energie-Einwirkungseinheit (800) in Bewegungsrichtung des Substrats (100) gesehen vor der Kontaktierungseinheit (900) angeordnet ist.

**Claims**

**1.** Process for producing an article comprising the steps of:

> I) providing a layer (200) on a substrate (100), wherein the layer (200) contains a meltable polymer;
> II) energizing a selected portion of the layer (200) provided in step I) corresponding to a first selected cross section of the article so that the layer (200) in the selected portion is at least partially melted and at least one at least partially melted volume (400, 401) is obtained;
> III) contacting the at least one volume (400, 401) obtained in step II) with a carrier (500) so that the at least one volume (400, 401) is joined to the carrier (500) ;
> IV) removing the carrier (500) including the at least one volume (400, 401) joined to the carrier (500) from the substrate (100);
> V) providing a further layer (201) on the substrate (100) or on a further substrate, wherein the layer (201) contains a meltable polymer;
> VI) energizing a selected portion of the layer (201) provided in step V) corresponding to a further selected cross section of the article so that the layer (201) in the selected portion is at least partially melted and at least one at least partially melted volume (402, 403) is obtained;

VII) contacting the at least one volume (402, 403) obtained in step VI) with at least one of the volumes (400, 401) previously joined to the carrier (500) so that the volume (402, 403) obtained in step VI) is joined to at least one of the volumes (400, 401) previously joined to the carrier (500);

VIII) removing the carrier (500) including the volumes (400, 401, 402, 403) joined to the carrier (500) from the substrate (100);

IX) repeating steps V) to VIII) until the article is formed, **characterized in that** the contacting in step III) and/or step VII) is performed such that it comprises performing a relative movement of the carrier (500) toward the substrate (100), monitoring the contact pressure between the carrier (500) and the substrate (100) and/or between the carrier (500) and the surface of the layer (200, 201) and interrupting the relative movement upon exceedance of a predetermined contact pressure.

2. Process according to Claim 1, wherein the steps II) and/or VI) are performed such that the energizing of the selected portion of the layer (200, 201) is carried out by irradiation with an energy beam or a plurality of energy beams (300, 301, 302, 303).

3. Process according to Claim 1, wherein the steps II) and/or VI) are performed such that they comprise initially applying a liquid onto the selected portion of the layer (200, 201), wherein the liquid increases the absorption of energy in the regions of the layer (200, 201) contacted by it relative to the regions not contacted by it, and subsequently subjecting the layer (200, 201) to an energy source.

4. Process according to any of Claims 1 to 3, wherein the steps I) and/or V) are performed such that a layer comprising particles (200, 201) is applied to the substrate (100), wherein the particles contain a meltable polymer.

5. Process according to any of Claims 1 to 3, wherein the steps I) and/or V) are performed such that a film containing a meltable polymer is provided, wherein the film is arranged on a carrier film as a substrate.

6. Process according to any of Claims 1 to 5, wherein the meltable polymer is selected such that a droplet of the meltable polymer in the molten state has a contact angle to the substrate (100) used in the process of $\geq 60°$ to $\leq 180°$
and/or
the meltable polymer is selected such that a droplet of the meltable polymer in the molten state has a contact angle to the carrier (500) used in the process of $\geq 0°$ to $\leq 90°$
wherein the contact angle is measured by means of optical methods at a temperature of 20°C above the melting point of the polymer.

7. Process according to any of Claims 1 to 6, wherein the steps II) and/or VI) are performed such that the at least one obtained volume (400, 401, 402, 403) does not contact the substrate (100).

8. Process according to any of Claims 4 to 7, wherein the steps II) and/or VI) are performed such that after the at least partial melting of the particles their molten material at a temperature of $\geq 20°C$ above the melting point of their material has a storage modulus G' (determined by viscometric measurement with a plate/plate oscillation shear viscometer at an angular frequency of 1/s) of $\geq 5 \cdot 10^3$ Pa to $\leq 1 \cdot 10^7$ Pa.

9. Process according to any of Claims 1 to 8, wherein the steps III) and/or VII) are performed such that volumes (400, 401) previously joined to the carrier (500) have a storage modulus G' (determined by viscometric measurement with a plate/plate oscillation shear viscometer at an angular frequency of 1/s) of $> 1 \cdot 10^7$ Pa.

10. Process according to any of Claims 1 to 9, wherein the meltable polymer is selected from the group consisting of polyurethane, polyester, polyalkylene oxide, plasticized PVC, polyamide, protein, PEEK, PEAK, polypropylene, polyethylene, thermoplastic elastomer, POM, polyacrylate, polymethylmethacrylate, polystyrene, polycarbonate or a combination of at least two of these.

11. Process according to any of Claims 1 to 10, wherein the substrate (100) is in the form of a movable conveyor belt having a side carrying the layer comprising particles (200, 201).

12. System for performing the process according to any of Claims 1 to 13, comprising:

- a control unit (600);
- a substrate (100);
- an application unit (700) for providing a layer (200, 201) on a substrate (100), wherein the layer (200, 201) contains a meltable polymer;
- an energizing unit (800) for energizing a selected portion of the layer (200, 201) corresponding to a selected cross section of an article to be produced so that the layer in the selected portion is at least partially melted and an at least partially melted volume or a plurality of at least partially melted volumes (400, 401, 402, 403) are obtained;

- a contacting unit (900) for contacting the volume or volumes (400, 401) obtained via the energizing unit and for removing this volume or volumes (400, 401, 402, 403) from the substrate (100);

wherein the energizing unit (800) performs the energizing under command of the control unit (700) and the contacting unit (900) performs the contacting under command of the control unit (700) and **characterized in that** the contacting is performed such that it comprises performing a relative movement of a carrier (500) toward the substrate (100), monitoring the contact pressure between the carrier (500) and the substrate (100) and/or between the carrier (500) and the surface of the layer (200, 201) and interrupting the relative movement upon exceedance of a predetermined contact pressure.

13. System according to Claim 12, wherein the substrate (100) is in the form of a movable conveyor belt having a side carrying a layer comprising particles (200, 201) and this side has a movement direction;
the energizing unit (800) is in the form of an irradiation unit;
the application unit (700) is arranged upstream of the energizing unit (800) as viewed in the movement direction of the substrate (100) and
the energizing unit (800) is arranged upstream of the contacting unit (900) as viewed in the movement direction of the substrate (100).

## Revendications

1. Procédé de fabrication d'un objet, le procédé comprenant les étapes suivantes :

   I) appliquer une couche (200) sur un substrat (100), la couche (200) contenant un polymère fusible ;
   II) apporter de l'énergie à une partie sélectionnée de la couche (200) appliquée à l'étape I), laquelle partie correspond à une première section transversale sélectionnée de l'objet, de façon à faire fondre au moins partiellement la couche (200) dans la partie sélectionnée et à obtenir au moins un volume (400, 401) au moins partiellement fondu ;
   III) mettre l'au moins un volume (400, 401) obtenu à l'étape II) en contact avec un support (500) de façon à relier l'au moins un volume (400, 401) au support (500) ;
   IV) retirer le support (500), y compris l'au moins un volume (400, 401) relié au support (500), du substrat (100) ;
   V) appliquer une autre couche (201) sur le substrat (100) ou un autre substrat, la couche (201) contenant un polymère fusible ;
VI) apporter de l'énergie sur une partie sélectionnée de la couche (201) prévue à l'étape V), laquelle partie correspond à une autre section transversale sélectionnée de l'objet, de façon à faire fondre au moins partiellement la couche (201) dans la partie sélectionnée et à obtenir au moins un volume (402, 403) au moins partiellement fondu ;
VII) mettre l'au moins un volume (402, 403) obtenu à l'étape VI) en contact avec l'un au moins des volumes (400, 401) préalablement reliés au support (500), de façon à relier le volume (402, 403) obtenu à l'étape VI) à l'un au moins des volumes (400, 401) préalablement reliés au support (500) ;
VIII) retirer le support (500), y compris les volumes (400, 401, 402, 403) reliés au support (500), du substrat (100) ;
IX) répéter les étapes V) à VIII) jusqu'à former l'objet,

**caractérisé en ce que**
la mise en contact de l'étape III) et/ou de l'étape VII) est effectuée de manière à produire un mouvement relatif du support (500) par rapport au substrat (100), la pression de contact entre le support (500) et le substrat (100) et/ou entre le support (500) et la surface de la couche (200, 201) étant surveillée et le mouvement relatif étant interrompu lorsqu'une pression de contact prédéterminée est dépassée.

2. Procédé selon la revendication 1, les étapes II) et/ou VI) sont réalisées de façon à apporter de l'énergie sur la partie sélectionnée de la couche (200, 201) par irradiation avec un ou plusieurs faisceaux d'énergie (300, 301, 302, 303).

3. Procédé selon la revendication 1, les étapes II) et/ou VI) étant réalisées de façon appliquer d'abord un liquide sur la partie sélectionnée de la couche (200, 201), le liquide augmentant l'absorption d'énergie dans les zones de contact de la couche (200, 201) par rapport aux zones qui ne sont pas en contact avec celle-ci, puis de façon à soumettre la couche (200, 201) à une source d'énergie.

4. Procédé selon l'une des revendications 1 à 3, les étapes I) et/ou V) étant réalisées de façon à appliquer une couche de particules (200, 201) sur le substrat (100), les particules contenant un polymère fusible.

5. Procédé selon l'une des revendications 1 à 3, les étapes I) et/ou V) étant réalisées de façon à produire un film contenant un polymère fusible, le film étant disposé comme substrat sur une feuille de support.

6. Procédé selon l'une des revendications 1 à 5, le polymère fusible étant sélectionné de telle sorte qu'une goutte du polymère fusible présente à l'état fondu un angle de contact ≥ 60° à ≤ 180° par rapport au substrat (100) utilisé dans le procédé, et/ou le polymère fusible étant sélectionné de telle sorte qu'une goutte du polymère fusible présente à l'état fondu un angle de contact ≥ 0° à ≤ 90° par rapport au support (500) utilisé dans le procédé, la mesure de l'angle de contact étant effectuée au moyen de méthodes optiques à une température de 20 °C au-dessus de la température de fusion du polymère.

7. Procédé selon l'une des revendications 1 à 6, les étapes II) et/ou VI) étant réalisées de telle sorte que l'au moins un volume (400, 401, 402, 403) obtenu ne soit pas en contact avec le substrat (100).

8. Procédé selon l'une des revendications 4 à 7, les étapes II) et/ou VI) étant réalisées de telle manière que, après la fusion au moins partielle des particules, leur matière fondue à une température ≥ 20 °C au-dessus du point de fusion de leur matière ait un module de stockage G' ≥ 5 · 10³ Pa à ≤ 1 · 10⁷ Pa, déterminé par mesure de viscosité avec un viscosimètre à cisaillement par oscillation plaque/plaque à une pulsation de 1/s.

9. Procédé selon l'une des revendications 1 à 8, les étapes III) et/ou VII) étant réalisées de manière à ce que les volumes (400, 401) préalablement reliés au support (500) aient un module de stockage G' > 1 · 10⁷ Pa, déterminé par mesure de viscosité avec un viscosimètre à cisaillement par oscillation plaque/plaque à une pulsation de 1/s.

10. Procédé selon l'une des revendications 1 à 9, le polymère fusible étant sélectionné dans le groupe comprenant le polyuréthane, le polyester, l'oxyde de polyalkylène, le PVC plastifié, le polyamide, une protéine, le PEEK, le PEAK, le polypropylène, le polyéthylène, un élastomère thermoplastique, le POM, un polyacrylate, un polyméthacrylate de méthyle, le polystyrène, le polycarbonate ou une combinaison d'au moins deux d'entre eux.

11. Procédé selon l'une des revendications 1 à 10, le substrat (100) étant conçu comme une bande transporteuse mobile dont un côté porte la couche de particules (200, 201) .

12. Système destiné à mettre en œuvre le procédé selon l'une des revendications 1 à 11, le système comprenant :

   - une unité de commande (600) ;
   - un substrat (100) ;

   - une unité d'application (700) destinée à appliquer une couche (200, 201) sur un substrat (100), la couche (200, 201) contenant un polymère fusible ;
   - une unité d'apport d'énergie (800) destinée à apporter de l'énergie à une partie sélectionnée de la couche (200, 201), laquelle partie correspond à une section transversale sélectionnée d'un objet à fabriquer de façon à faire fondre au moins partiellement la couche dans la partie sélectionnée et à obtenir un volume au moins partiellement fondu ou plusieurs volumes au moins partiellement fondus (400, 401, 402, 403) ;
   - une unité de contact (900) destinée à la mise en contact du ou des volumes (400, 401) obtenus par l'unité d'apport d'énergie et pour retirer ce ou ces volumes (400, 401, 402, 403) du substrat (100) ;

l'unité d'apport d'énergie (800) effectuant l'apport sur instruction de l'unité de commande (700) et l'unité de contact (900) effectuant la mise en contact sur instruction de l'unité de commande (700) et **caractérisé en ce que** la mise en contact est effectuée de telle manière qu'un mouvement relatif d'un support (500) par rapport au substrat (100) soit effectué, la pression de contact entre le support (500) et le substrat (100) et/ou entre le support (500) et la surface de la couche (200, 201) étant surveillée et le mouvement relatif étant interrompu lorsqu'une pression de contact prédéterminée est dépassée.

13. Système selon la revendication 12, le substrat (100) étant conçu comme une bande transporteuse mobile dont un côté porte une couche de particules (200, 201) et ce côté ayant un sens de déplacement ; l'unité d'apport d'énergie (800) étant conçue comme une unité d'irradiation ; l'unité d'application (700) étant disposée devant l'unité d'apport d'énergie (800), vue dans le sens de déplacement du substrat (100), et l'unité d'apport d'énergie (800) étant disposée devant l'unité de contact (900), vue dans le sens de déplacement du substrat (100).

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1648686 A
- EP 1713311 A1
- WO 2003059026 A1
- CN 204109374 U
- WO 2012164015 A1
- US 2009304952 A1
- WO 2015107066 A1
- US 20050208168 A1
- US 20150246487 A1
- DE 2901774 A
- EP 0192946 A1

**In der Beschreibung aufgeführte Nicht-Patentliteratur**

- High Polymers. **VON J.H. SAUNDERS ; K.C. FRISCH.** Polyurethane. Verlag Interscience Publishers, 1962, vol. XVI